Europäisches Patentamt

European Patent Office

Office européen des brevets

(11) Veröffentlichungsnummer: **0 148 963**
A2

# (12) EUROPÄISCHE PATENTANMELDUNG

(21) Anmeldenummer: **84100322.1**

(22) Anmeldetag: **13.01.84**

(51) Int. Cl.⁴: **A 47 J 41/02**
F 25 D 3/08

(30) Priorität: **05.09.83 DE 3331954**

(43) Veröffentlichungstag der Anmeldung:
**24.07.85 Patentblatt 85/30**

(84) Benannte Vertragsstaaten:
**AT BE CH DE FR GB IT LI LU NL SE**

(71) Anmelder: **Rotpunkt Dr. Anso Zimmermann**
**Industriestrasse**
**D-6434 Niederaula  Bad Hersfeld(DE)**

(72) Erfinder: **Zimmermann, Anso, Dr.**
**Seilerweg 34**
**D-6430 Bad Hersfeld(DE)**

(74) Vertreter: **Körber, Wolfhart, Dr. et al,**
**Patentanwälte Dipl.-Ing. H. Mitscherlich Dipl.-Ing. K.**
**Gunschmann Dr.rer.nat. W. Körber Dipl.Ing. J.**
**Schmidt-Evers Dipl.-Ing. W. Melzer Steinsdorfstrasse 10**
**D-8000 München 22(DE)**

(54) **Isoliergefäss, insbesondere Isolierkanne oder -flasche mit Kühlakku.**

(57) Es wird ein Isoliergefäß, insbesondere Isolierkanne oder -flasche beschrieben mit deren Verschlußkörper ein Kühlakku verbunden ist, der im Schließzustand des Verschlußkörpers in den Innenraum des Isoliergefäßes hineinragt.

FIG. 1

EP 0 148 963 A2

Isoliergefäß, insbesondere Isolierkanne oder
-flasche mit Kühlakku

Die Erfindung bezieht sich auf ein Isoliergefäß, insbesondere Isolierkanne oder -flasche bestehend aus einem Isolierbehälter, einem diesen umgebenden Mantel, sowie einem in ein mit dem Mantel verbundenes Kopfteil einschraub- oder einrastbaren oder die obere Öffnung des Isolierbehälters einsetzbaren Verschlußkörper.

Isoliergefäße dieser Art sind dazu ausgebildet und ausersehen, einzufüllende warme Inhalte warm zu halten oder einzufüllende kalte Inhalte kühl zu halten. Solche Gefäße sind von ihrer Natur her nicht geeignet, als Behälter für einen Inhalt zu dienen, dessen Temperatur geändert werden soll. Ist beispielsweise ein kühles Getränk in einer Isolierflasche zu warm geworden oder ein warmes Getränk in einer Isolierkanne zu kalt für den Verzehr geworden, ist es erforderlich, das Getränk insgesamt aus der Kanne oder Flasche auszugießen und anderweitig der Temperaturänderung zu unterziehen.

Der Erfindung liegt die Aufgabe zugrunde, ein Isoliergefäß der genannten Art so weiterzubilden, daß in ihm mit Raumtemperatur oder höherer Temperatur eingefüllte Inhalte insbesondere Getränke in dem Isoliergefäß heruntergekühlt werden können.

**0148963**

Zur Lösung dieser Aufgabe wird erfindungsgemäß vorgeschlagen, daß an dem Verschlußkörper ein Kühlakku angeordnet ist, der im Schließzustand des Verschlußkörpers in den Innenraum des Isoliergefäßes hineinragt. Dabei taucht der Kühlakku in die zu kühlende Flüssigkeit ein und bringt diese auf die gewünschte niedrige Temperatur, bei der sie dann für längere Zeit in dem Isoliergefäß gehalten werden kann.

Kühlakkus, welche aus dünnwandigen Kunststoffbehältern bestehen und mit einem geeigneten Kühlmedium gefüllt sind, sind an sich bekannt. Derartige Kühlakkus werden in einem Kühl- oder Gefrierschrank auf niedrige Temperatur gebracht und anschließend in Behältnisse beigepackt, in welchen Güter für einige Zeit kühl zu halten sind.

Es hat sich gezeigt, daß derartige Kühlakkus in Verbindung mit Isoliergefäßen, insbesondere wenn sie mit dem Verschlußkörper integriert sind, besonders wirksam sind. Innerhalb des Isoliergefäßes kommt der Kühlakku in einen eng begrenzten und wärmeisolierten Raum so daß seine Kühlkapazität ohne Verluste nach außen voll der zu kühlenden Flüssigkeit innerhalb des Isoliergefäßes zugute kommt.

Zweckmässige Ausbildungen der Erfindung sind in den Unteransprüchen gekennzeichnet. Ist der Kühlakku gemäß Anspruch 2 einstückig mit dem Verschlußkörper ausgebildet, so kann der gesamte Verschlußkörper als Kühlakku betrachtet werden, welcher austauschbar für verschiedene Isoliergefäße bereitgehalten werden kann, wenn eine Flüssigkeit in dem betreffenden Isoliergefäß heruntergekühlt werden soll. Ist der Kühlakku mit dem Verschlußkörper lösbar verbunden, muß jeweils der bereitgehaltene Kühlakku mit dem Verschlußkörper verbunden werden, um dem jeweiligen Isoliergefäß mit herunterzukühlender Flüssigkeit zugeordnet zu werden.

Ist gemäß weiterer Ausbildung der Kühlakku als Zylinderkörper ausgebildet und geschlitzt, so daß der Akku mehrere nach unten ragende Zungenkörper mit Zwischenräumen aufweist, ergibt sich ein besonders günstiges Verhältnis zwischen Oberfläche und Volumen des Kühlakku, so daß in ihm gespeicherte Kühlkapazität wirksam an die Flüssigkeit abgegeben werden kann.

In den beigefügten Zeichnungen sind beispielsweise zwei Ausführungsformen von Kühlakkus dargestellt. Es zeigen

Fig. 1 schematisch im Schnitt das Oberteil einer Isolierflasche mit zylindrischem Kühlakku und

Fig. 2 in entsprechender Ansicht einen zylindrischen Kühlakku mit Zungenkörpern.

Das Isoliergefäß besteht aus einem wärmeisolierenden Isolierbehälter 1 und einem diese umgebenden Mantel 2. Im Bereich der Öffnung 3 des Isolierbehälters 1 schließt ein insgesamt mit 4 bezeichnetes Kopfteil nach oben an, welches gegen den oberen Rand der Öffnung 3 des Isolierbehälters 1 durch eine Dichtung 5 abgedichtet ist und mit dem Mantel 2 auf geeignete Weise bei 6 verbunden ist. Das Kopfteil 4 umfaßt einen zylindrischen Rand 7 mit Innengewinde, wobei der zylindrische Rand 7 auf einer Seite zu einem nicht dargestellten Ausgießer geformt sein kann. Auf der dem nicht dargestellten Ausgießer gegenüberliegenden Seite des Kopfteiles 4 kann ein ebenfalls nicht dargestellter Henkel angeformt sein. In das Innengewinde des Randes 7 ist mit seinem steilgängigen Außengewinde 8 ein insgesamt mit 9 bezeichneter Verschlußkörper eingeschraubt, der aus einem gespritzten Kunststoffteil mit einem in die Öffnung 3 des Isolierbehälters 2 ragenden Bereich 10 besteht. Mit 11 ist eine an dem Schraubverschluß 9 angeordnete elastische Dichtung bezeichnet, welche sich im aufgeschraubten Zustand des Verschlußkörpers 9 auf einen Dichtungssitz im Kopfteil 4 auflegt.

Mit dem in die Isolierbehälter-Öffnung 3 ragenden Bereich 10 des Verschlußkörpers 9 ist ein als langgestreckter zylindrischer Körper ausgebildeter Kühlakku 12 lösbar verbunden. Der Bereich 10 weist dazu einen nach unten ragenden Flansch 14 auf, in welchem der Kühlakku 12 mit einem oberen Flansch eingeschraubt ist. Eine Einfüllöffnung für das Kühlmedium in den beispielsweise aus dünnwandigem Kunststoff bestehenden zylindrischen Kühl-akku 12 ist bei 13 angedeutet.

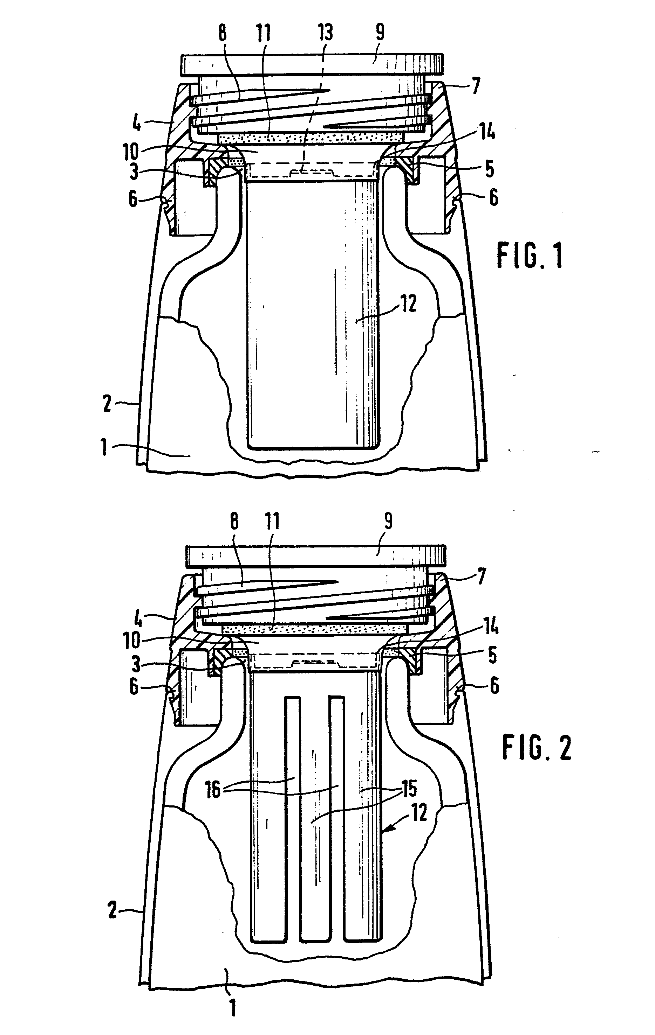

Bei der Ausführungsform nach Fig. 2 sind gleiche Teile mit gleichen Bezugszeichen versehen und werden nicht nochmals erläutert. Der Kühlakku besteht aus einem in der Außenform ebenfalls zylindrischen Körper, der jedoch von der Bodenseite her geschlitzt ist, so daß nach unten in den Isolierbehälter 1 ragende Zungenkörper 15 mit Zwischenräumen 16 gebildet sind.

ANSPRÜCHE

1. Isoliergefäß, insbesondere Isolierkanne oder -flasche, bestehend aus einem Isolierbehälter, einem diesen umgebenden Mantel, sowie einem in ein mit dem Mantel verbundenes Kopfteil einschraub- oder einrastbaren oder die obere Öffnung des Isolierbehälters einsetzbaren Verschlußkörper, dadurch gekennzeichnet, daß an dem Verschlußkörper (9) ein Kühlakku (12) angeordnet ist, der im Schließzustand des Verschlußkörpers in den Innenraum des Isolierbehälters (1) hineinragt.

2. Isoliergefäß nach Anspruch 1, dadurch gekennzeichnet, daß der Kühlakku (12) einstückig mit dem Verschlußkörper (9) aus Kunststoff gespritzt oder geblasen ist.

3. Isoliergefäß nach Anspruch 1, dadurch gekennzeichnet, daß der Kühlakku (12) aus Kunststoff gespritzt oder geblasen und mit dem Verschlußkörper (9) lösbar verbunden ist.

4. Isoliergefäß nach Anspruch 3, dadurch gekennzeichnet, daß der Kühlakku (12) mit dem Verschlußkörper (9) verrastet ist.

5. Isoliergefäß nach Anspruch 3, dadurch gekennzeichnet, daß der Kühlakku (12) mit dem Verschlußkörper (9) verschraubt ist.

6. Isoliergefäß nach Anspruch 2 oder 3, dadurch gekennzeichnet, daß der Kühlakku (12) als langgestreckter zylindrischer Körper ausgebildet ist, der im Bereich der oberen Stirnfläche mit dem Verschlußkörper (9) verbunden ist.

7. Isoliergefäß nach Anspruch 6, dadurch gekennzeichnet, daß der Kühlakku-Zylinder (12) in der Querschnittsgröße dem Querschnitt der oberen Öffnung (3) des Isolierbehälters (1) weitergehend angepaßt ist, ohne an der Innenwandung der Isolierbehälter-Öffnung anzuliegen.

8. Isoliergefäß nach Anspruch 6 oder 7, dadurch gekennzeichnet, daß der Kühlakku-Zylinder (12) ausgehend von der in dem Isolierbehälter ragenden Bodenseite her geschlitzt ist, derart, daß der Akku mehrere nach unten ragende Zungenkörper (15) mit Zwischenräumen (16) aufweist.

0148963

FIG. 1

FIG. 2